# EUROPÄISCHE PATENTSCHRIFT

(11) **EP 2 079 906 B1**
(45) Veröffentlichungstag und Bekanntmachung des Hinweises auf die Patenterteilung: **20.05.2015**
(21) Anmeldenummer: 07802324.9
(22) Anmeldetag: 15.09.2007
(51) Int. Cl.: F02B 23/10

(54) **BRENNKRAFTMASCHINE MIT DIREKTEINSPRITZUNG**
INTERNAL COMBUSTION ENGINE WITH DIRECT INJECTION
MOTEUR A COMBUSTION INTERNE DOTE D'UNE INJECTION DIRECTE

(30) Priorität: 17.10.2006 DE 102006048870
(43) Veröffentlichungstag der Anmeldung: 22.07.2009
(73) Patentinhaber: Volkswagen Aktiengesellschaft, 38440 Wolfsburg (DE)
(72) Erfinder: POTT, Ekkehard, 38518 Gifhorn (DE); THEOBALD, Jörg, 38165 Lehre (DE); KLOFT, Manfred, 38154 Königslutter (DE); LIPPERT, Eduard, 38547 Calberlah (DE)
(86) Internationale Anmeldenummer: PCT/EP2007/008040
(87) Internationale Veröffentlichungsnummer: WO 2008/046483

(56) Entgegenhaltungen:
- EP-A- 1 111 216
- EP-A- 1 304 460
- DE-A1-102004 017 084
- US-A1- 2002 078 919
- US-B1- 6 267 096

## Beschreibung

Die Erfindung betrifft eine Brennkraftmaschine, insbesondere Ottomotor, insbesondere eines Kraftfahrzeugs, mit einer Kurbelwelle, wenigstens einem Arbeitszylinder, welcher zusammen mit einem Kolben und einem Zylinderkopf einen Brennraum ausbildet, und einem Zylinderkopf, der mit einer dem Brennraum zugewandten Seite eine senkrecht zu einer Mittellängsachse des Arbeitszylinders angeordnete Brennraumebene definiert, wobei jedem Arbeitszylinder jeweils ein Einlasskanal mit einem wahlweise den Einlasskanal mit dem Brennraum verbindenden Einlassventil, ein Auslasskanal mit einem wahlweise den Auslasskanal mit dem Brennraum verbindenden Auslassventil, eine in den Brennraum ragende Zündeinrichtung und ein in den Brennraum ragender Kraftstoffinjektor zugeordnet ist, wobei eine y-Richtung parallel zu einer Längsachse der Kurbelwelle, d.h. in Längsrichtung der Brennkraftmaschine, eine x-Richtung senkrecht zur y-Richtung und parallel zur Brennraumebene, d.h. in Querrichtung der Brennkraftmaschine, sowie eine z-Richtung senkrecht zur x-Richtung und zur y-Richtung ausgerichtet ist, wobei Kreuzungspunkte von jeweiligen Mittelachsen des Einlassventiles und des Auslassventiles mit einer von der x-Richtung und der y-Richtung aufgespannten, in der Brennraumebene liegenden x-y-Ebene diagonal gegenüberliegend auf einer in der Brennraumebene liegenden ersten Brennraumdiagonalen angeordnet sind und Kreuzungspunkte von jeweiligen Mittelachsen der Zündeinrichtung und des Kraftstoffinjektors mit der x-y-Ebene diagonal gegenüberliegend auf einer in der Brennraumebene liegenden zweiten Brennraumdiagonalen angeordnet sind, gemäß dem Oberbegriff des Patentanspruchs 1.

Aus der DE 198 53 357 A1 ist ein gattungsgemäßer Zylinderkopf bekannt, bei dem für einen Arbeitszylinder Einlassventil sowie Auslassventil einerseits und Kraftstoffinjektor sowie Zündeinrichtung andererseits jeweils diagonal gegenüberliegend angeordnet sind.

Aus der EP 1 111 216 A2 ist die Ausbildung einer Brennkammer für Brennkraftmaschinen mit Direkteinspritzung und Funkenzündung bekannt. Die Längsachse eines Kraftstoffinjektors ist in einem Winkel A von etwa 30° bis 60° zu einer Horizontalen und in einem Winkel B von etwa 0° bis 15° zu einer vertikalen Ebene, die den Injektor und eine Mitte der Zylinderbohrung umfasst, angeordnet. Die Zündkerze ist in der Mitte der Zylinderbohrung angeordnet. Einlassventil und Auslassventil sind nebeneinander innerhalb einer Hälfte eines von der Zylinderbohrung im Querschnitt gebildeten Kreises angeordnet.

Der Erfindung liegt die Aufgabe zugrunde, eine Brennkraftmaschine der o.g. Art hinsichtlich Aufbau und Funktion zu verbessern.

Diese Aufgabe wird erfindungsgemäß durch eine Brennkraftmaschine der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einer Brennkraftmaschine der o.g. Art erfindungsgemäß vorgesehen, dass der Kraftstoffinjektor derart angeordnet ist, dass eine Längsachse des Kraftstoffinjektors mit der x-y-Ebene einen Winkel β von größer 30° und mit einer von der x-Richtung und der z-Richtung aufgespannten x-z-Ebene einen Winkel α von kleiner 30° einschließt.

Dies hat den Vorteil, dass sich ein geringer Abstand von einer Injektorspitze zu der Zündeinrichtung ergibt, was insbesondere bei einer späten Nacheinspritzung von Kraftstoff durch den Kraftstoffinjektor vorteilhaft ist.

Eine Beschleunigung der Verbrennung durch eine Quetschströmung wird dadurch erzielt, dass der Brennraum im Bereich der Zündeinrichtung eine Quetschfläche aufweist.

Zweckmäßigerweise weist der Kolben eine Kolbenmulde auf, die sich in Richtung der zweiten Brennraumdiagonale erstreckt, wobei zur Führung des in die Kolbenmulde eingespritzten Kraftstoffes hin zur Zündeinrichtung der Kolben im Bereich der Zündeinrichtung angrenzend zur Kolbenmulde eine Wulst aufweist.

Beispielsweise sind das Einlassventil und Auslassventil eines Arbeitszylinders derart angeordnet, dass ein Winkel σ zwischen Längsachsen von Einlassventil und Auslassventil dieses Arbeitszylinders einen Wert von kleiner 50°, insbesondere kleiner 30° hat.

In einer bevorzugten Ausführungsform ist das Einlassventil derart ausgebildet, dass ein Durchmesser des Einlassventils am Ventilteller größer als 45%, insbesondere größer als 50%, der Zylinderbohrung ist.

In einer bevorzugten Weiterbildung der Erfindung ist das Auslassventil derart ausgebildet, dass ein Durchmesser des Auslassventils am Ventilteller größer als 40%, insbesondere größer als 50%, der Zylinderbohrung ist.

Zweckmäßigerweise sind Einlassventil, Auslassventil, Zündeinrichtung und Kraftstoffinjektor derart angeordnet, dass ein Winkel γ zwischen der ersten und zweiten Brennraumdiagonalen kleiner oder gleich 90° ist.

In einer bevorzugten Ausführungsform ist der Kraftstoffinjektor als Mehrlochinjektor mit 4 bis 18 Kraftstoffaustrittsbohrungen ausgebildet. Hierbei ist der Mehrlochinjektor derart ausgebildet, dass eine Strahleindringtiefe bei 100 bar Kraftstoffdruck und bei 1500 µs kleiner oder gleich 100% des Kolbenhubes, insbesondere 80% des Kolbenhubes, beträgt. Ein Kegelwinkei ν eines Einzelstrahls aus einer Kraftstoffaustrittsbohrung ist beispielsweise größer 7°, insbesondere größer 10°. Ein Kegelwinkel τ eines Gesamtstrahles aus allen Einzelstrahlen ist beispielsweise größer 45°, insbesondere 55°.

Die Erfindung wird im Folgenden anhand der Zeichnung näher erläutert. Diese zeigt in
- Fig. 1: eine erste bevorzugte Ausführungsform für die Anordnung von Einlass-, Auslassventil, Zündeinrichtung und Kraftstoffinjektor für einen Zylinder einer ansonsten nicht näher dargestellten erfindungsgemäßen Brennkraftmaschine in Aufsicht und
- Fig. 2: in perspektivischer Ansicht.

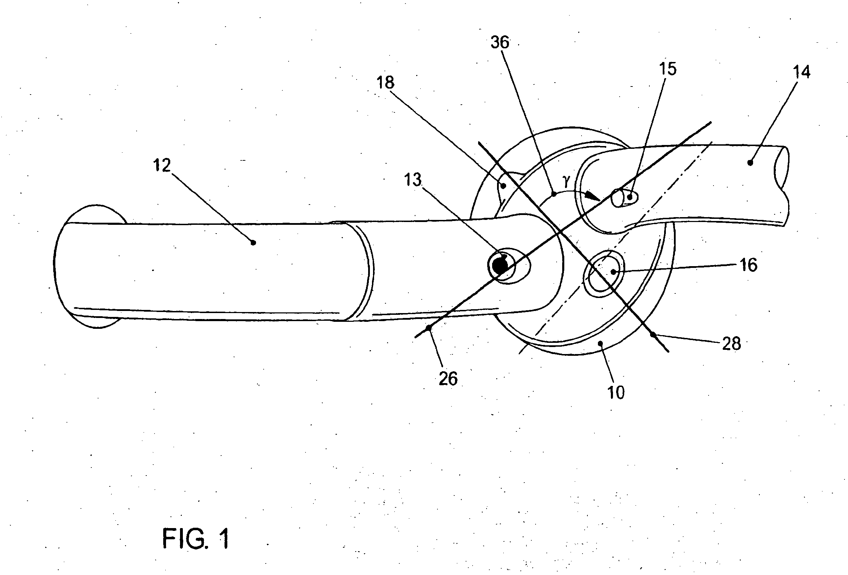

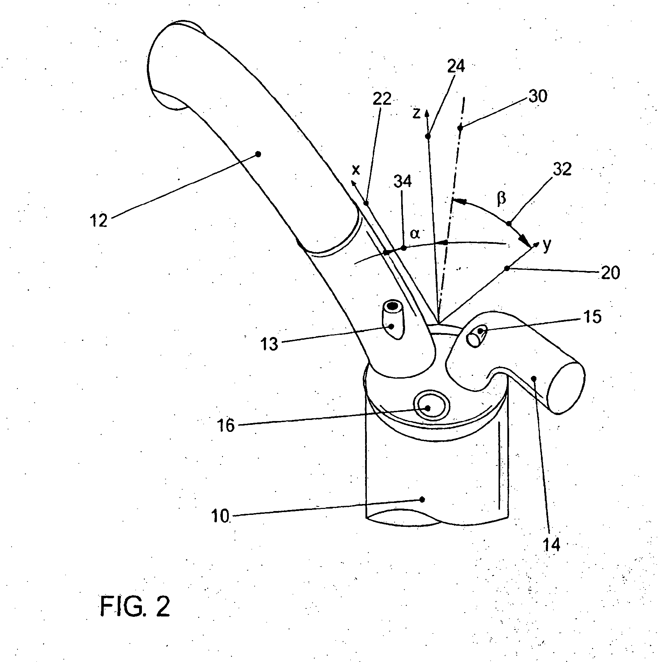

Die in Fig. 1 und 2 dargestellte, bevorzugte Ausführungsform einer erfindungsgemäßen Brennkraftmaschine umfasst in der Regel mehrere Arbeitszylinder 10, von denen in den Fig. 1 und 2 jeweils lediglich einer dargestellt ist. Der Arbeitszylinder 10 bildet zusammen mit einem Kolben (nicht dargestellt) und einem Zylinderkopf (nicht dargestellt) einen Brennraum aus. Jedem Arbeitszylinder 10 ist jeweils ein Einlasskanal 12 mit einem wahlweise den Einlasskanal 12 mit dem Brennraum verbindenden Einlassventil 13, ein Auslasskanal 14 mit einem wahlweise den Auslasskanal 14 mit dem Brennraum verbindenden Auslassventil 15, eine in den Brennraum ragende Zündeinrichtung 16 und ein in den Brennraum ragender Kraftstoffinjektor 18 zugeordnet. Der Zylinderkopf definiert für jeden Arbeitszylinder 10 mit einer dem jeweiligen Brennraum zugewandten Seite eine Brennraumebene, die senkrecht zu einer Mittellängsachse des Arbeitszylinders 10 angeordnet ist.

Eine y-Richtung 20 ist parallel zu einer Längsachse der Kurbelwelle, d.h. in Längsrichtung der Brennkraftmaschine, eine x-Richtung 22 ist senkrecht zur y-Richtung 20 und parallel zu einer vom Zylinderkopf definierten Zylinderkopfebene bzw. Brennraumebene, d.h. in Querrichtung der Brennkraftmaschine, und eine z-Richtung 24 ist senkrecht zur x-Richtung 22 und zur y-Richtung 20 ausgerichtet. Jeweilige Kreuzungspunkte von Mittelachsen des Einlassventiles 13 und des Auslassverttiles 15 mit einer x-y-Ebene, die durch die x-Achse 22 und die y-Achse 20 aufgespannt wird und in der Brennraumebene liegt, sind diagonal gegenüberliegend auf einer in der Brennraumebene liegenden ersten Brennraumdiagonaten 26 angeordnet und jeweilige Kreuzungspunkte von Mittelachsen der Zündeinrichtung 16 und des Kraftstoffinjektors 18 mit derselben x-y-Ebene sind diagonal gegenüberliegend auf einer in der Brennraumebene liegenden zweiten Brennraumdiagonalen angeordnet. Der Kraftstoffinjektor 18 weist eine Längsachse 30 auf.

Der Brennraum ist vorzugsweise dachförmig ausgebildet. Bei einem Ottomotor mit Benzindirekteinspritzung mündet der Hochdruckeinspritzinjektor 18 zur Einspritzung von flüssigen Ottomotorenkraftstoffen direkt in den Brennraum. Bei einem herkömmlichen Direkteinspritzer mit je zwei Einlass- und zwei Auslassventilen pro Zylinder, betätigt durch zwei oben liegende Nockenwellen, ist der Hochdruckinjektor entweder zentral im Brennraumdach oder unterhalb und mittig zwischen den beiden Einlassveritilen angeordnet. Zur Minderung der Motorteile- und Fertigungskosten wird die Konstruktion des Zylinderkopfes so vereinfacht, dass der Gaswechsel mit lediglich einem Einlassventil 13 und einem Auslassventil 15 pro Zylinder 10 vollzogen wird. Die Betätigung der beiden Ventile 13, 15 erfolgt über eine einzelne, oben liegende Nockenwelle. Durch den Entfall zweier Ventile und einer Nockenwelle ergeben sich weitere Möglichkeiten den Injektor 18 im Brennraum anzuordnen.

Erfindungsgemäß ist der Kraftstoffinjektor 18 derart angeordnet, dass die Längsachse 30 des Kraftstoffinjektors 18 mit der x-y-Ebene einen Winkel β 32 von größer 30° und mit einer von der x-Richtung 22 und der z-Richtung 24 aufgespannten x-z-Ebene einen Winkel α 34 von kleiner 30° einschließt.

Durch die gezeigte Anordnung des Injektors 18 ergibt sich ein geringer Abstand von Injektorspitze zur Zündeinrichtung 16. Dies ist insbesondere bei einer späten Einspritzung des Kraftstoffes von Vorteil. Im Bereich der Zündeinrichtung 16 ist der Brennraum vorteilhafterweise derart gestaltet, dass sich eine große Quetschfläche ergibt, die die Verbrennung durch die erzeugte Quetschströmung beschleunigt. Der Kolben weist hierbei bevorzugt eine in Richtung der zweiten Brennraumdiagonale 28 angeordnete Kolbenmulde auf. Im Bereich der Zündeinrichtung 16 weist der Kolben einen Wulst um die Kolbenmulde auf. Dieser Wulst dient zur Führung des in die Kolbenmulde eingespritzten Kraftstoffes hin zur Zündeinrichtung 16. Einlassventil 13, Auslassventil 15, Zündeinrichtung 16 und Kraftstoffinjektor 18 sind derart angeordnet, dass ein Winkel γ 36 zwischen der ersten und zweiten Brennraumdiagonalen kleiner oder gleich 100° ist.

## Patentansprüche

1. Brennkraftmaschine, insbesondere Ottomotor, insbesondere eines Kraftfahrzeugs, mit einer Kurbelwelle, wenigstens einem Arbeitszylinder (10), welcher zusammen mit einem Kolben und einem Zylinderkopf einen Brennraum ausbildet, und einem Zylinderkopf, der mit einer dem Brennraum zugewandten Seite eine senkrecht zu einer Mittellängsachse des Arbeitszylinders (10) angeordnete Brennraumebene definiert, wobei jedem Arbeitszylinder (10) jeweils ein Einlasskanal (12) mit einem wahlweise den Einlasskanal (12) mit dem Brennraum verbindenden Einlassventil (13), ein Auslasskanal (14) mit einem wahlweise den Auslasskanal (14) mit dem Brennraum verbindenden Auslassventil (15), eine in den Brennraum ragende Zündeinrichtung (16) und ein in den Brennraum ragender Kraftstoffinjektor (18) zugeordnet ist, wobei eine y-Richtung (20) parallel zu einer Längsachse der Kurbelwelle, d.h. in Längsrichtung der Brennkraftmaschine, eine x-Richtung (22) senkrecht zur y-Richtung (20) und parallel zur Brennraumebene, d.h. in Querrichtung der Brennkraftmaschine, sowie eine z-Richtung (24) senkrecht zur x-Richtung (22) und zur y-Richtung (20) ausgerichtet ist, wobei Kreuzungspunkte von jeweiligen Mittelachsen des Einlassventiles (13) und des Auslassventiles (15) mit einer von der x-Richtung (22) und der y-Richtung (20) aufgespannten, in der Brennraumebene liegenden x-y-Ebene diagonal gegenüberliegend auf einer in der Brennraumebene liegenden ersten Brennraumdiagonalen (26) angeordnet sind und Kreuzungspunkte von jeweiligen Mittelachsen der Zündeinrichtung (16) und des Kraftstoffinjektors (18) mit der x-y-Ebene diagonal gegenüberliegend auf einer in der Brennraumebene liegenden zweiten Brennraumdiagonalen (28) angeordnet sind, **dadurch gekennzeichnet, dass** der Kraftstoffinjektör (18) derart angeordnet ist, dass eine Längsachse (30) des Kraftstoffinjektors (18) mit der x-y-Ebene einen Winkel β (32) von größer 60°und mit einer von der x-Richtung (22) und der z-Richtung (24) aufgespannten x-z-Ebene einen Winkel α (34) von kleiner 30° einschließt.

2. Brennkraftmaschine nach Anspruch 1, **dadurch gekennzeichnet, dass** der Winkel α (34) kleiner 15°, insbesondere gleich 0° ist.

3. Brennkraftmaschine nach wenigstens einem der vorhergehenden Ansprüche, **dadurch gekennzeichnet, dass** der Brennraum im Bereich der Zündeinrichtung (16) eine Quetschfläche aufweist.

4. Brennkraftmaschine nach wenigstens einem der vorhergehenden Ansprüche, **dadurch gekennzeichnet, dass** der Kolben eine Kolbenmulde aufweist, die sich in Richtung der zweiten Brennraumdiagonale (28) erstreckt.

5. Brennkraftmaschine nach Anspruch 4, **dadurch gekennzeichnet, dass** der Kolben im Bereich der Zündeinrichtung (16) angrenzend zur Kolbenmulde eine Wulst aufweist.

6. Brennkraftmaschine nach wenigstens einem der vorhergehenden Ansprüche, **dadurch gekennzeichnet, dass** das Einlassventil (13) und Auslassventil (15) eines Arbeitszylinders (10) derart angeordnet sind, dass ein Winkel σ zwischen Längsachsen von Einlassventil (13) und Auslassventil (15) dieses Arbeitszylinders (10) einen Wert von kleiner 50°, insbesondere kleiner 30° hat.

7. Brennkraftmaschine nach wenigstens einem der vorhergehenden Ansprüche, **dadurch gekennzeichnet, dass** das Einlassventil (13) derart ausgebildet ist, dass ein Durchmesser des Einlassventils (13) am Ventilteller größer als 45%, insbesondere größer als 50%, der Zylinderbohrung ist.

8. Brennkraftmaschine nach wenigstens einem der vorhergehenden Ansprüche, **dadurch gekennzeichnet, dass** das Auslassventil (15) derart ausgebildet ist, dass ein Durchmesser des Auslassventils (15) am Ventilteller größer als 40%, insbesondere größer als 50%, der Zylinderbohrung ist.

9. Brennkraftmaschine nach wenigstens einem der vorhergehenden Ansprüche, **dadurch gekennzeichnet, dass** Einlassventil (13), Auslassventil (15), Zündeinrichtung (16) und Kraftstoffinjektor (18) derart angeordnet sind, dass ein Winkel γ (36) zwischen der ersten und zweiten Brennraumdiagonalen (26, 28) kleiner oder gleich 100° ist.

10. Brennkraftmaschine nach wenigstens einem der vorhergehenden Ansprüche, **dadurch gekennzeichnet, dass** der Kraftstoffinjektor als Mehrlochinjektor mit 4 bis 18 Kraftstoffaustrittsbohrungen ausgebildet ist.

11. Brennkraftmaschine nach Anspruch 10, **dadurch gekennzeichnet, dass** der Kraftstoffinjektor (18) als Mehrlochinjektor derart ausgebildet ist, dass eine Strahleindringtiefe bei 100 bar Kraftstoffdruck und bei 1.500 µs kleiner oder gleich 100% des Kolbenhubes, insbesondere 80% des Kolbenhubes, beträgt.

12. Brennkraftmaschine nach Anspruch 10 oder 11, **dadurch gekennzeichnet, dass** ein Kegelwinkel ν eines Einzelstrahls aus einer Kraftstoffaustrittsbohrung größer 7°, insbesondere größer 10° beträgt.

13. Brennkraftmaschine nach wenigstens einem der Ansprüche 1 bis 12, **dadurch gekennzeichnet, dass** ein Kegelwinkel τ eine Gesamtstrahles aus allen Einzelstrahlen größer 45°, insbesondere 55° beträgt.

## Claims

1. Internal combustion engine, in particular petrol engine, in particular of a motor vehicle, having a crankshaft, at least one working cylinder (10) which, together with a piston and a cylinder head, forms a combustion chamber, and a cylinder head which, with a side which faces the combustion chamber, defines a combustion chamber plane which is arranged perpendicularly with respect to a centre longitudinal axis of the working cylinder (10), each working cylinder, (10) in each case being assigned an inlet duct (12) with an inlet valve (13) which selectively connects the inlet duct (12) to the combustion chamber, an outlet duct (14) with an outlet valve (15) which selectively connects the outlet duct (14) to the combustion chamber, an ignition device (16) which protrudes into the combustion chamber, and a fuel injector (18) which protrudes into the combustion chamber, a y-direction (20) being oriented parallel to a longitudinal axis of the crankshaft, that is to say in the longitudinal direction of the internal combustion engine, an x-direction (22) being oriented perpendicularly with respect to the y-direction (20) and parallel to the combustion chamber plane, that is to say in the transverse direction of the internal combustion engine, and a z-direction (24) being oriented perpendicularly with respect to the x-direction (22) and with respect to the y-direction (20), intersection points of respective centre axes of the inlet valve (13) and the outlet valve (15) being arranged on a first combustion chamber diagonal (26) which lies in the combustion chamber plane such that they lie diagonally opposite one another with an x-y plane which is defined by the x-direction (22) and the y-direction (20) and lies in the combustion chamber plane, and intersection points of respective centre axes of the ignition device (16) and the fuel injector (18) being arranged on a second combustion chamber diagonal (28) which lies in the combustion chamber plane such that they lie diagonally opposite one another with the x-y plane, **characterized in that** the fuel injector (18) is arranged in such a way that a longitudinal axis (30) of the fuel injector (18) encloses an angle β (32) of greater than 60° with the x-y plane and an angle α (34) of less than 30° with an x-z plane which is defined by the x-direction (22) and the z-direction (24).

2. Internal combustion engine according to Claim 1, **characterized in that** the angle α (34) is less than 15°, in particular is equal to 0°.

3. Internal combustion engine according to at least one of the preceding claims, **characterized in that** the combustion chamber has a squeezing surface in the region of the ignition device (16).

4. Internal combustion engine according to at least one of the preceding claims, **characterized in that** the piston has a piston recess which extends in the direction of the second combustion chamber diagonal (28).

5. Internal combustion engine according to Claim 4, **characterized in that** the piston has a bead adjacent to the piston recess in the region of the ignition device (16).

6. Internal combustion engine according to at least one of the preceding claims, **characterized in that** the inlet valve (13) and the outlet valve (15) of a working cylinder (10) are arranged in such a way that an angle σ between longitudinal axes of the inlet valve (13) and the outlet valve (15) of the said working cylinder (10) has a value of less than 50°, in particular less than 30°.

7. Internal combustion engine according to at least one of the preceding claims, **characterized in that** the inlet valve (13) is configured in such a way that a diameter of the inlet valve (13) on the valve head is greater than 45%, in particular greater than 500, of the cylinder bore.

8. Internal combustion engine according to at least one of the preceding claims, **characterized in that** the outlet valve (15) is configured in such a way that a diameter of the outlet valve (15) on the valve head is greater than 40%, in particular greater than 50%, of the cylinder bore.

9. Internal combustion engine according to at least one of the preceding claims, **characterized in that** the inlet valve (13), the outlet valve (15), the ignition device (16) and the fuel injector (18) are arranged in such a way that an angle γ (36) between the first and the second combustion chamber diagonal (26, 28) is less than or equal to 100°.

10. Internal combustion engine according to at least one of the preceding claims, **characterized in that** the fuel injector is configured as a multiple hole injector with from 4 to 18 fuel outlet holes.

11. Internal combustion engine according to Claim 10, **characterized in that** the fuel injector (18) is configured as a multiple hole injector in such a way that a jet penetration depth at 100 bar fuel pressure and at 1500 µs is less than or equal to 100% of the piston stroke; in particular 80% of the piston stroke.

12. Internal combustion engine according to Claim 10 or 11, **characterized in that** a cone angle ν of an individual jet from one fuel outlet hole is greater than 7°, in particular greater than 10°.

13. Internal combustion engine according to at least one of Claims 10 to 12, **characterized in that** a cone angle τ of an overall jet comprising all the individual jets is greater than 45°, in particular 55°.

## Revendications

1. Moteur à combustion interne, en particulier moteur à allumage commandé, en particulier d'un véhicule automobile, comprenant un vilebrequin, au moins un cylindre de travail (10) qui forme, conjointement avec un piston et une tête de cylindre, une chambre de combustion, et une tête de cylindre qui définit, par un côté tourné vers la chambre de combustion, un plan de chambre de combustion disposé perpendiculairement à un axe médian longitudinal du cylindre de travail (10), un canal d'admission (12) doté d'une soupape d'admission (13) reliant de manière sélective le canal d'admission (12) à la chambre de combustion, un canal d'échappement (14) doté d'une soupape d'échappement (15) reliant de manière sélective le canal d'échappement (14) à la chambre de combustion, un dispositif d'allumage (16) faisant saillie dans la chambre de combustion et un injecteur de carburant (18) faisant saillie dans la chambre de combustion étant respectivement associés à chaque cylindre de travail (10), une direction y (20) étant orientée parallèlement à un axe longitudinal du vilebrequin, c'est-à-dire dans la direction longitudinale du moteur à combustion interne, une direction x (22) étant orientée perpendiculairement à la direction y (20) et parallèlement au plan de la chambre de combustion, c'est-à-dire dans la direction transversale du moteur à combustion interne, et une direction z (24) étant orientée perpendiculairement à la direction x (22) et à la direction y (20), des points de croisement d'axes médians respectifs de la soupape d'admission (13) et de la soupape d'échappement (15) avec un plan x-y sous-tendu par la direction x (22) et la direction y (20) et situé dans le plan de la chambre de combustion étant disposés de manière diagonalement opposée sur une première diagonale de chambre de combustion (26) située dans le plan de la chambre de combustion, et des points de croisement d'axes médians respectifs du dispositif d'allumage (16) et de l'injecteur de carburant (18) avec le plan x-y étant disposés de manière diagonalement opposée sur une deuxième diagonale de chambre de combustion (28) située dans le plan de la chambre de combustion, **caractérisé en ce que** l'injecteur de carburant (18) est disposé de telle sorte qu'un axe longitudinal (30) de l'injecteur de carburant (18) forme, avec le plan x-y, un angle β (32) supérieur à 60° et, avec un plan x-z sous-tendu par la direction x (22) et la direction z (24), un angle α (34) inférieur à 30°.

2. Moteur à combustion interne selon selon la revendication 1, **caractérisé en ce que** l'angle α (34) est inférieur à 15°, en particulier égal à 0°.

3. Moteur à combustion interne selon au moins l'une quelconque des revendications précédentes, **caractérisé en ce que** la chambre de combustion comprend une surface d'écrasement dans la région du dispositif d'allumage (16).

4. Moteur à combustion interne selon au moins l'une quelconque des revendications précédentes, **caractérisé en ce que** le piston comprend une cavité de piston qui s'étend dans la direction de la deuxième diagonale de chambre de combustion (28).

5. Moteur à combustion interne selon la revendication 4, **caractérisé en ce que** le piston comprend un renflement dans la région du dispositif d'allumage (16), de manière adjacente à la cavité de piston.

6. Moteur à combustion interne selon au moins l'une quelconque des revendications précédentes, **caractérisé en ce que** la soupape d'admission (13) et la soupape d'échappement (15) d'un cylindre de travail (10) sont disposées de telle sorte qu'un angle σ entre les axes longitudinaux de la soupape d'admission (13) et de la soupape d'échappement (15) de ce cylindre de travail (10) ait une valeur inférieure à 50°, en particulier inférieure à 30°.

7. Moteur à combustion interne selon au moins l'une quelconque des revendications précédentes, **caractérisé en ce que** la soupape d'admission (13) est réalisée de telle sorte qu'un diamètre de la soupape d'admission (13) au niveau de la tête de soupape soit supérieur à 45 %, en particulier supérieur à 50 %, de l'alésage de cylindre.

8. Moteur à combustion interne selon au moins l'une quelconque des revendications précédentes, **caractérisé en ce que** la soupape d'échappement (15) est réalisée de telle sorte qu'un diamètre de la soupape d'échappement (15) au niveau de la tête de soupape soit supérieur à 40 %, en particulier supérieur à 50 %, de l'alésage de cylindre.

9. Moteur à combustion interne selon au moins l'une quelconque des revendications précédentes, **caractérisé en ce que** la soupape d'admission (13), la soupape d'échappement (15), le dispositif d'allumage (16) et l'injecteur de carburant (18) sont disposés de telle sorte qu'un angle γ (36) entre la première et la deuxième diagonale de chambre de combustion (26, 28) soit inférieur ou égal à 100°.

10. Moteur à combustion interne selon au moins l'une quelconque des revendications précédentes, **caractérisé en ce que** l'injecteur de carburant est réalisé sous forme d'injecteur multitrous présentant 4 à 18 alésages de sortie de carburant.

11. Moteur à combustion interne selon la revendication 10, **caractérisé en ce que** l'injecteur de carburant (18) est réalisé sous forme d'injecteur multitrous de telle sorte qu'une profondeur de pénétration de jet à une pression de carburant de 100 bars et à 1500 µs soit inférieure ou égale à 100 % de la course de piston, en particulier vaille 80 % de la course de piston.

12. Moteur à combustion interne selon la revendication 10 ou 11, **caractérisé en ce qu'**un angle de cône ν d'un jet individuel hors d'un alésage de sortie de carburant est supérieur à 7°, en particulier supérieur à 10°.

13. Moteur à combustion interne selon au moins l'une quelconque des revendications 10 à 12, **caractérisé en ce qu'**un angle de cône τ d'un jet global constitué de tous les jets individuels est supérieur à 45°, en particulier supérieur à 55°.
